# EUROPÄISCHE PATENTANMELDUNG

(11) **EP 4 725 294 A1**
(43) Veröffentlichungstag der Anmeldung: **15.04.2026**
(21) Anmeldenummer: 25203408.7
(22) Anmeldetag: 19.09.2025
(51) Int. Cl.: A01G 9/02

(54) **PFLANZKASSETTE ZUR FASSADENBEGRÜNUNG AN GEBÄUDEN**

(30) Priorität: 09.10.2024 DE 102024129200; 31.01.2025 DE 202025100498 U
(71) Anmelder: Belke, Clemens, 57368 Lennestadt (DE); SCHRAG Fassaden GmbH, 09116 Chemnitz (DE)
(72) Erfinder: Belke, Clemens, 57368 Lennestadt (DE); Hacker, Ruben, 09116 Chemnitz (DE)
(74) Vertreter: Däbritz, Frank

(57) **Zusammenfassung**

Die Erfindung betrifft eine kassettenförmige Vorrichtung zur Montage an Gebäudefassaden und Bepflanzung. Beschrieben wird eine Pflanzkassette zur Fassadenbegrünung an Gebäuden, umfassend
a) eine Innenschale (1) zur Befestigung parallel an einer Gebäudefassade, mit einem flächigen Teil (1d),
mit einer linken und einer rechten, vom flächigen Teil (1d) der Innenschale in Richtung einer Außenseite (B) abstehenden Abschlusswandung (1b),
b) wobei die Wandungen jeweils mindestens zwei, vom flächigen Teil (1d) in Richtung der Außenseite (B) wegweisende und nach oben verlaufende Haken (1c) aufweisen,
c) Außenschale (2) mit Perforierungen (2c) zum Durchführen der Haken (1c) und Einhängen der Außenschale in diese Haken,
d) wobei die Außenschale runde oder rechteckige Pflanzlöcher (2b) von mindestens 50 mm Durchmesser bzw. jeweils mindestens 50 mm Länge beider Kanten hat,
e) wobei Innen- und Außenschale (1, 2) aus Metall sind,
f) wobei die Innenschale (1) in der unteren Hälfte eine nach vorn in Richtung der Außenseite (B) weisende, spitz zulaufende Einbuchtung (3) aufweist, wobei die Einbuchtung einen Oberlauf (3a) und einen Unterlauf (3c) mit einem Umkehrpunkt (3b) dazwischen umfasst.

## Beschreibung

Die Erfindung betrifft eine kassettenförmige Vorrichtung zur Montage an Gebäudefassaden und Bepflanzung. Es handelt sich um ein wandgebundenes System - dabei gibt es keinen Bodenanschluss und die Pflanzen sind unmittelbar in die Fassade eingebettet und werden von dort aus versorgt.

Im Stand der Technik bekannt sind lediglich Lösungen bekannt, die nur erschwert eine Revision, das heißt teilweise Demontage, Reinigung, Pflanzentausch etc., erlauben. Vielfach ist der Aufwand bei bekannten Lösungen sehr hoch.

Des Weiteren bringen bekannte Lösungen vielfach den Nachteil mit sich, dass entweder Staunässe auftritt oder dass, gegenteilig, Regen- oder Gießwasser zu schnell durch die Fassadenbegrünung hindurchfließt. Dies tritt insbesondere bei älterem, nur noch wenig saugfähigem Pflanzsubstrat auf.

Bekannte Lösungen finden sich beispielsweise in DE102010024555B4, CN110924574A oder CN110306702A. Auch Vorhangschutzfassaden als solche sind beschrieben (CN113062507A).

Keines der Dokumente erlaubt eine einfache Revision, bei ausreichend Stabilität und der Fähigkeit der Wasserrückhaltung bei gleichzeitiger Verhinderung von Staunässe. Darüber hinaus fehlt vielfach eine ausreichende Windstabilität.

Aufgabe der Erfindung ist die Bereitstellung einer Lösung, die diese Nachteile überwindet.

Die Aufgabe wird mit den Merkmalen der unabhängigen Patentansprüche gelöst. Bevorzugte Ausführungen sind in den abhängigen Unteransprüchen beschrieben.

Gegenstand der Erfindung ist eine Pflanzkassette zur Fassadenbegrünung an Gebäuden, umfassend:
a) eine Innenschale zur Befestigung parallel an einer Gebäudefassade, mit einem flächigen Teil (dieser verläuft parallel zur Gebäudefassade),
   mit einer linken und einer rechten, vom flächigen Teil der Innenschale in Richtung einer Außenseite B abstehenden Abschlusswandung,
b) wobei diese Abschlusswandungen jeweils mindestens zwei, vom flächigen Teil in Richtung der Außenseite B wegweisende (d.h. nach vorn abstehende und vom Gebäude wegweisende) und nach oben (in Richtung C) verlaufende Haken aufweisen,
c) eine Außenschale mit Perforierungen zum Durchführen der Haken und Einhängen der Außenschale in diese Haken,
d) wobei die Außenschale runde oder rechteckige Pflanzlöcher von mindestens 50 mm Durchmesser bzw. jeweils mindestens 50 mm Länge beider Kanten hat,
e) wobei Innen- und Außenschale aus Metall sind,
f) wobei die Innenschale in der unteren Hälfte eine nach vorn in Richtung der Außenseite B (das ist in Richtung der eingehängten Außenschale) weisende, spitz zulaufende Einbuchtung aufweist, wobei die Einbuchtung einen Oberlauf und einen Unterlauf mit einem Umkehrpunkt dazwischen (im Querschnitt betrachtet) umfasst - im Sinne einer V-förmigen, über die gesamte Breite verlaufenden Wulst.

Die Begriffe "links" und "rechts" betreffen die Ausrichtung der Pflanzkassette im an die Gebäudefassade angebrachten Zustand, das heißt von der Außenseite frontal blickend im aufrecht vor dem Gebäude stehenden Zustand. Beispielsweise die Abschlusswandungen verlaufen senkrecht von der Fassade abstehend von oben nach unten. Sie sind somit links und rechts vertikal angeordnet. Auch ggfs. vorhandene Trennwandungen (aus bevorzugten Ausführungsformen weiter unten) verlaufen so und sind parallel zu den Außenwandungen (also zwischen linker und rechter Außenwandung) an dem flächigen Teil der Innenschale angebracht.

"Innenschale" im Sinne der Erfindung ist das oben beschriebene "flächige Teil" mit den Abschlusswandungen an der linken und rechten Kante des flächigen Teils mit sich daran anschließender Einbuchtung. Das flächige Teil ist eben und soll bei Montage am Gebäude parallel zur Gebäudefassade verlaufen.

Die "Innenschale" verläuft (bei Betrachtung im an die Gebäudefassade montierten Zustand) von oben nach unten gesehen zuerst parallel zur Gebäudefassade, geht dann in den Oberlauf über, und verläuft dabei nach vorn (weg von der Fassade) in Richtung eingehängter Außenschale bis zu einem Umkehrpunkt (bzw. Umkehrkante, zwischen Oberlauf und Unterlauf). Ab dem Umkehrpunkt verläuft sie wieder in Richtung der Gebäudefassade zurück und hat bevorzugt noch einen gewissen Verlauf (in Richtung unten) parallel zur Gebäudefassade in der Ebene, wie oben bereits beschrieben - beispielsweise 3,5 cm±10% oder ±5%.

Die Außenfassade wird mittels der "Perforierungen" in die Haken der Abschlusswandungen eingehängt.

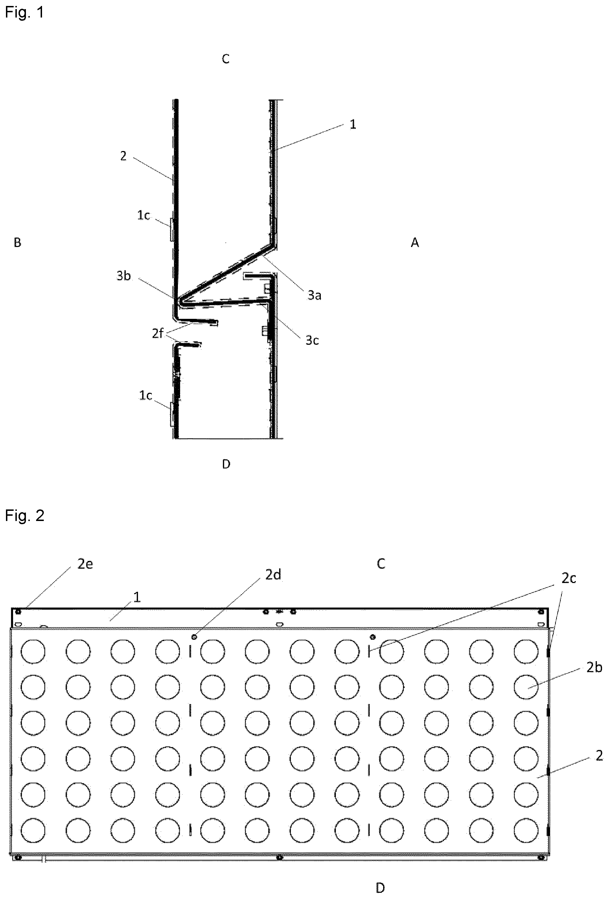

Die erfindungsgemäße "Einbuchtung", umfassend den Oberlauf und den Unterlauf, hat erkennbar (bei Queransicht, wie in Fig. 1) eine ungefähre V-Form, wobei ein Winkel mit Hohlraum gebildet wird (entlang dem Verlauf Oberlauf--> Umkehrpunkt--> Unterlauf).

Die Einbuchtung ist sinnvollerweise einstückig mit dem flächigen Teil der Innenschale ausgebildet (d.h. sie kann einfach durch Biegung des Metalls der Innenschale hergestellt werden).

Bezüglich des Materials sind erkennbar auch die linke und rechte Abschlusswandung aus Metall.

Die Materialstärke kann beispielsweise 2mm oder 3mm sein oder dazwischen liegen und betrifft sowohl Innenschale als auch Außenschale,

Geeignet sind insbesondere Metalle, wie beispielsweise Aluminium, Stahl oder Edelstahl).

Die "Pflanzlöcher" können sinnvollerweise in Reihen angeordnet sein (parallel zur obersten Kante der Außenschale/Bezugszeichen 2e). Diese vertikalen Reihen haben beispielsweise einen Abstand untereinander von bevorzugt 10,5 cm (±20%), wobei innerhalb der Reihen ein Abstand von 13,2 cm (±20%) sinnvoll ist.

Im Falle runder Pflanzlöcher und deren Durchmesser ist (nach der Formel für die Kreisfläche) die Fläche dieser Pflanzlöcher rechnerisch mindestens 19,63 cm² groß. Rund umfasst auch nahezu rund, wie bspw. im Falle elliptischer Pflanzlöcher, wobei die offene Fläche anhand des idealrunden Kreises mit Durchmesser bestimmt würde.

Im Falle rechteckiger Pflanzlöcher ist jede Kante des Rechtecks mindestens 50 mm bzw. 5 cm groß. Es kann sich auch um quadratische Pflanzlöcher handeln, bei denen beide Kanten gleich groß sind. Die Fläche ist jedenfalls dann mindestens 25 cm² groß.

### Vorteile

Die erfindungsgemäße Pflanzkassette kann im Raum zwischen Innenkassette und eingehängter Außenkassette bspw. mit Pflanzsubstrat gefüllt werden. Über die Einbuchtung wird gewährleistet, dass Wasser langsam von einer in die darunter liegende nächste Pflanzkassette laufen kann ohne Staunässe zu verursachen. Gleichzeitig dient die Einbuchtung jedoch einer gewissen Rückhaltung des Wassers.

Die Pflanzkassette umfasst Innen- und Außenschale, diese werden also mit Pflanzsubstrat gefüllt, Außen- und Innenschale werden verbunden, und können anschließend bepflanzt und vorkultiviert werden. Die dann fertig (zusammengebauten) und vorkultivierten Kassetten können dann auf einer System-/Standard-Unterkonstruktion am Gebäude als vorgehängte und hinterlüftete Fassade verbaut werden. Die revisionierbare Außenschale erlaubt dann im Zuge der Wartung und Pflege punktuell und gezielt das Substrat zu tauschen, ggf. nachzupflanzen, ohne die Innenschale aus dem Verbund der Fassade herauszulösen, d.h. ohne sie zu demontieren. Die Vorhangfassade selbst bleibt "geschlossen", die Dämmung geschützt, die Hinterlüftung bleibt stets gewährleistet.

Mit der Erfindung ist eine Revision also leicht mittels des Aus- und Einhängens der Außenschale über die Perforierungen in die Haken möglich.

Die Pflanzkassette ist darüber hinaus nicht brennbar.

Die Erfindung ermöglicht die Montage an Gebäudefassaden von unten nach oben - und zwar bereits als Pflanzkassette fertig zusammengebaut, d.h. mit in die Innenschale eingehängter Außenschale. Dabei kann zuerst eine untere Pflanzkassette am oberen Ende des flächigen Teils der Innenschale mit der Gebäudefassade verschraubt werden (1. Schraube) und danach wird eine zweite Pflanzkassette mit dem unteren Ende ihrer Innenschale (d.h. dem Bereich unterhalb ihres Unterlaufs) mit dieser zuvor genannten unteren Pflanzkassette und der Gebäudefassade so verschraubt (2. Schraube), dass sich untere und zweite (obere) Innenschale überlappen. Die erste Schraube befindet sich danach oberhalb der zweiten. Bevor die Pflanzkassetten verschraubt werden, sind sie bereits fertig zusammengebaut und bepflanzt.

Es kann aber auch eine andere formschlüssige Kopplung vorgesehen sein. Wenn die Kopplung zwischen untereinander angeordneten Pflanzkassetten erreicht werden soll, kann sie beispielsweise so ausgestaltet sein, dass sie durch eine Anlage der Oberkante der unteren Pflanzkassette an die Unterkante der oberen Pflanzkassette und anschließendes Schwenken der unteren Pflanzkassette in ihre vertikale Lage erzeugt wird. Vor der Schwenkbewegung ist dann die untere Pflanzkassette nicht vertikal ausgerichtet (sondern vorzugsweise im Wesentlichen horizontal). Ein solches Einhaken der unteren Pflanzkassette in die obere Pflanzkassette durch eine Schwenkbewegung um beispielsweise ca. 90° hat den Vorteil, dass eine mit Pflanzen bestückte Pflanzkassette stabil (d. h. in horizontaler Ausrichtung) zu ihrem Einsatzort transportiert werden kann und erst unmittelbar bei Anbringung an der Wand in die vertikale Lage überführt werden muss. Ferner wird durch die formschlüssige Kopplung mit der oberen Pflanzkassette die Montage erleichtert, da die untere Pflanzkassette bereits an ihrem Platz gehalten wird, während die restlichen Schritte der vollständigen Montage (z.B. die Verbindung mit der Unterkonstruktion) durchgeführt werden. Die vorstehend beschriebene Kopplung durch ein Schwenken kann auf verschiedene Weisen erzeugt werden. Beispielsweise kann die Rückwand der unteren Pflanzkassette an ihrer Oberkante einen Überstand aufweisen mit einem in Richtung der Vorderwand weisenden Randstreifen, und die obere Pflanzkassette kann eine Aufnahme für diesen Randstreifen haben. Durch eine Schwenkbewegung kann dann der Randstreifen in der Aufnahme eingehängt werden.

Des Weiteren kann mittels vorkultivierter Pflanzen eine Pflanzdichte von >70 Pflanzen/m² erreicht werden, so dass vorteilhaft die Fassaden bereits mit der Installation grün sind.

### Bevorzugte Ausführungsformen

In einer bevorzugten Ausführung der Erfindung liegt die Breite des flächigen Teils der Innenschale (links-rechts) bei 158,7 cm und die Höhe (in Richtung C-D gemessen) bei 66,4 cm (von oberer Kante (Bezugszeichen 2e) bis zum Beginn der Einbuchtung (Bezugszeichen 3) gemessen) (jeweils ±20% oder auch nur ±10% oder ±5%). Insgesamt hat die Innenschale bevorzugt eine Höhe (Ausdehnung in Richtung C-D) von Ihrer oberen Kante (Bezugszeichen 2e) bis zum untersten Ende) von 74,0 cm (mit den gleichen relativen Bereichsgrenzen).

Die Breite kann aber je nach Gebäude an die Gebäudegeometrie angepasst werden. Auch kleinere Breiten ab bspw. 50cm bis zu größeren von bspw. 600cm sind möglich.

Bevorzugt entspricht der Abstand zwischen linker und rechter Abschlusswandung dann ebenfalls dieser Breite. Bevorzugt kann er also auch bei 158,7 cm (±20% oder ±10, auch ±5%) liegen - gemessen an den Außenflächen.

Bevorzugt haben die Pflanzöffnungen jeweils eine offene Fläche mit einem Durchmesser von mindestens ca. 60mm, bevorzugt 70mm. Die genaue Form der Pflanzöffnungen kann dabei grundsätzlich beliebig sein. Pflanzöffnungen mit einer derart großen offenen Fläche haben den Vorteil, dass sie den Einsatz verhältnismäßig großer Pflanzen ermöglichen. Die Pflanzen können somit effizient großgezogen werden und müssen erst kurz vor der geplanten Montage der Pflanzkassetten in diese eingesetzt werden. Anders als beim Stand der Technik muss keine Bepflanzung durch enge Schlitze erfolgen, was ein anschließendes längeres Anwachsen der Pflanzen erfordert, bevor die Kassetten montiert werden können.

Bevorzugt sind die Pflanzlöcher kreisrund und der Durchmesser beträgt besonders bevorzugt 59 cm, besonders bevorzugt 7 cm (±10%). Es ist von Vorteil, wenn diese Pflanzlöcher solch einen großen Durchmesser haben, denn damit können vorkultivierte Pflanzen eingesetzt werden. Gleichzeitig ist die erfindungsgemäße Pflanzkassette trotz dieser relativ großen Löcher ausreichend windstabil.

In einer anderen bevorzugten Ausführungsform der Erfindung weist die Außenschale im Abstand von der obersten Kante (im Falle eines umlaufenden Randes oben also die Kante, bevor der umlaufende Rand beginnt) mindestens zwei Sicherungslöcher auf. Der Abstand zur oberen Kante kann vom Fachmann gewählt werden.

Bevorzugt ist die Pflanzkassette aus einer Legierung ausgewählt aus AlMg1 (Magnesium-Anteil 0,7-1,1 Gew.-%) und AlMg3 (Magnesium-Anteil 2,6-3,6 Gew.-%).

In einer ebenfalls bevorzugten Ausführung bildet die Einbuchtung dort, wo sie spitz zuläuft (also am Umkehrpunkt) einen Spalt von mindestens 1 mm Abstand zur eingehängten Außenschale, durch den Wasser über den Oberlauf in unter der Pflanzkassette befindliche weitere Pflanzkassetten fließen kann.

Der Spalt ist bevorzugt 1mm-1cm groß, besonders bevorzugt 1 mm - 5 mm oder auch nur 1-3 mm.

Ganz besonders bevorzugt ist es in dieser Ausführungsform, wenn Sie wie folgt kombiniert wird, nämlich so, dass sich bei der erfindungsgemäßen Pflanzkassette die Einbuchtung über die gesamte Breite, zwischen linker und rechter Abschlusswandung der Innenschale erstreckt und eine Wulst bildet, die am Umkehrpunkt eine Umkehrkante bildet, und wobei (wie zuvor erwähnt)
sie dort, wo sie spitz zuläuft (also am Umkehrpunkt bzw. Umkehrkante) einen Spalt von mindestens 1 mm Abstand zur eingehängten Außenschale bildet, durch den Wasser über den Oberlauf (3a) in unter der Pflanzkassette befindliche weitere Pflanzkassetten fließen kann.

In einer weiteren bevorzugten Ausführungsform der Erfindung ist an der Innenschale mindestens eine senkrecht abstehende Trennwandung befestigt ist, wobei auch diese die jeweils mindestens zwei nach vorn (vom Gebäude weg) abstehende und nach oben verlaufende Haken (wie sie an den Abschlusswandungen vorhanden sind) aufweist und parallel zur linken und rechten Abschlusswandung angeordnet ist. Besonders bevorzugt ist die Trennwandung auf der Innenschale angeschweißt. Es können auch mehrere Trennwandungen vorhanden sein. Sinnvollerweise sind die Perforierungen der Außenschale für die Haken dieser Trennwandung(en) in den Freiräumen zwischen den Pflanzlöchern in Reihen angeordnet, wie auch in Fig. 2 erkennbar. Besonders bevorzugt gibt es zwei solcher Trennwandungen und/oder gibt es vier Haken je Trennwandung bzw. je Abschlusswandung, wie in der Ausführung in Fig. 2 gezeigt.

Vorteil dieser Ausführungsform ist eine erhöhte Stabilität zwischen Innen- und Außenschale. Bei extremen Windereignissen kann die Außenschale und auch die Innenschale dadurch weniger in Schwingung geraten.

In einer anderen bevorzugten Ausführung der Erfindung weist die Außenschale oben (C), unten (D), rechts und links jeweils einen umlaufenden Außenschalenrand, welcher in Richtung der Innenschale weist, und der im Winkel von im Wesentlichen 90° absteht. Es ist der Winkel gemeint zwischen diesem Rand und der Außenschalenfläche (das ist die größte der Flächen der Außenschale).

"Im Wesentlichen 90°" bedeutet bspw. gemäß einer bevorzugten Ausführungsform: der obere Rande hat 85° zwischen Rand und Fläche und der untere Rand hat 95° zwischen Rand und Fläche - so dass im Querschnitt betrachtet beide Ränder parallel zueinander verlaufen und leicht schräg nach unten weisen. Vorteilhaft kann so Wasser im Innern zwischen Innenschale und Außenschale von einer Pflanzkassette ins Innere einer darunter befindlichen weiteren Pflanzkassette fließen, wie bspw. in Fig. 1 erkennbar.

Es ist dabei besonders vorteilhaft, wenn der untere Rand einer Außenschale breiter ist (also weiter in Richtung Innenschale ragt) als der obere Rand (einer Außenschale), wie ebenfalls in Fig. 1 ersichtlich. Genauere Abmessungen sind in Ausführungen weiter unten beschrieben, die alle miteinander kombiniert werden können.

Es ist beispielsweise in dieser Ausführungsform mit umlaufenden Rand besonders günstig, wenn bei der Außenschale ihr oberer Rand eine Breite von 2 cm und ihr unterer Rand von 3,5 cm aufweist, alle Werte mit Bereichsgrenzen von ±10% oder nur vorn ±5%. Es ist auch hier mit "oberer Rand" der obere Teil des umlaufenden Randes gemeint, also der Teil, der im montierten Zustand der Pflanzkassette betrachtet am oberen Ende in Richtung C vorhanden ist. Diese Breiten sind jeweils gemessen von der Kante bis zum Ende des Randes.

Bevorzugt haben der linke Rand und der rechte Rand jeweils eine Breite von 2,5 cm (±10%, oder sogar nur ±5%).

Ebenfalls besonders bevorzugt in diesen Ausführungen mit umlaufendem Rand und Winkel von im Wesentlichen 90° ist es, wenn alle Winkel wie folgt festgelegt sind: der Winkel an der oberen Kante der Außenschale bei 85°, an der unteren Kante der Außenschale bei 95°, an der linken und rechten Kante bei jeweils 90%, alle Werte mit Bereichsgrenzen von ±5%, oder ±4%.

In einer anderen bevorzugten Ausführungsform der Erfindung weist die Innenschale oben (Richtung C) einen senkrecht vom flächigen Teil abstehenden Innenschalenrand auf, der in Richtung der erfindungsgemäßen Einbuchtung absteht. Dieser Innenschalenrand befindet sich sinnvollerweise nur am oberen Ende der Innenschale. Besonders bevorzugt ist der Innenschalenrand 2,5 cm breit (±20% oder auch nur ±10% oder auch ±5%) (d.h. er steht 2,5 cm ab) und verläuft entlang der ganzen Breite an der oberen Kante des flächigen Teils der Innenschale. Vorteil des Innenschalenrandes ist eine bessere Stabilität der Innenschale.

In einer weiteren bevorzugten Ausführung der Erfindung weist der Unterlauf mindestens zwei Bewässerungslöcher auf, durch die Wasser durchfließen kann - beispielsweise Wasser aus einem Wasserschlauch, der zwischen Oberlauf, Unterlauf im V-förmigen Hohlraum geführt werden kann. Die Bewässerungslöcher können dabei auch so klein sein, dass das Wasser nur langsam hindurchsickern kann. Vorteilhaft kann das Wasser durch diese Bewässerungslöchern von einer Zusatzbewässerung mittels solch eines Schlauches von der einen Pflanzkassette (umfassend Innenschale und Außenschale) in die nächste darunter befindliche Pflanzkassette (mit Innenschale und Außenschale) fließen. So kann leicht in besonders trockenen Perioden zusätzlich zum oben an der Gebäudefassade zugeführten Wasser bewässert werden. Besonders vorteilhaft ist eine Kombination mit dem oben aufgeführten Innenschalenrand, denn dieser verhindert, dass solch ein Wasserschlauch aus dem V-förmigen Hohlraum in Richtung Wandseite A zwischen Pflanzkassette und Gebäudefassade hinunterrutscht.

In einer ebenfalls bevorzugten Ausführung der Erfindung spannen Oberlauf und Unterlauf (am Umkehrpunkt bzw. der Umkehrkante der Einbuchtung) einen Winkel von 27° ±10% (bevorzugt ±5% oder sogar nur ±2%) auf (das ist der spitze Winkel des oben genannten V-Hohlraums, wie in Fig. 1 erkennbar), und/oder
der flächige Teil der Innenschale und der Oberlauf spannen einen Winkel von 120° ±20% (bevorzugt ±10% oder sogar nur ±5%) auf. Günstig ist auch eine Kombination beider Optionen.

Diese Winkel haben sich als besonders günstig erwiesen, um ausreichende Stabilität der Einbuchtung für das Halten von Pflanzsubstrat und gleichzeitig gute Wasserablauffähigkeit zu erreichen.

Bevorzugt ist es bei der Erfindung auch, wenn die Länge des Oberlaufs 9,5 cm ±20% beträgt, oder auch nur in den Bereichsgrenzen ±10%, bevorzugt nur ±5% - und zwar gemessen entlang des Oberlaufs selbst. Besonders bevorzugt ist die Kombination mit der weiter vorn genannten Ausführungsform mit einem Spalt von mindestens 1mm Abstand.

In einer bevorzugten Ausführungsform der Erfindung ist der Winkel, der von Unterlauf und dem darunter befindlichen Teil der Innenschale aufgespannt wird, 87° ±12% (bevorzugt nur ±6%) aufspannen. Dieser "darunter befindliche Teil der Innenschale" verläuft bevorzugt in der Ebene des flächigen Teils der Innenschale, mindestens aber parallel dazu. Die Bereichsgrenzen können auch hier ±10%, oder sogar nur ±5% betragen. Vorteil dieser Ausführungsform ist, dass über den Oberlauf ablaufendes Wasser am Umkehrpunkt besser abtropfen kann.

Bevorzugt ist es bei der Erfindung, wenn im eingehängten Zustand (Außenschale eingehängt in die Haken der Innenschale) der Abstand zwischen Innenschale und Außenschale (also jeweils deren flächigen Teile), gemessen an den Außenseiten, bei 8,6 cm ±20% liegt, bevorzugt nur ±10% oder nur ±5% (gemessen also ohne Haken). Erkennbar sind in dieser Ausführungsform auch die linke und die rechte Abschlusswandung (und ggfs. vorhandene Trennwandungen) ähnlich breit, nämlich bevorzugt 8,8 cm breit (d.h. gemessen senkrecht zur Längsrichtung der Trennwandungen (also gemessen in Richtung C-D). Die an den Abschlusswandungen (bzw. an den Trennwandungen) vorhandenen Haken sind hierbei nicht einberechnet.

Die relativen Bereichsgrenzen betragen hier immer ±20%, bevorzugt nur ±10% oder nur ±5%.

In einer ebenfalls bevorzugten Ausführungsform der Erfindung
- hat bei der Innenschale der oben befindliche Innenschalenrand eine Breite von 2,5 cm ±5%, und/oder
- weisen die linke und rechte Abschlusswandung eine Breite von 9,0 cm ±20% auf (inklusive der Breite der Haken, im Sinne der Maximalausdehnung, also der Tiefe im montierten Zustand) - (bevorzugt auch im Bereich von nur ±10% oder sogar nur ±5%).

In diesen Varianten der Ausführungsform ist besonders bevorzugt bei der Innenschale unten (im montierten Zustand ist das Richtung D) kein abstehender Rand, sondern die Innenschale endet mit einem Abschnitt, der parallel zum flächigen Teil verläuft. Vorteil dieser Varianten ist ein guter Schutz gegen Witterung, bei gleichzeitig ausreichende Hinterlüftung.

In einer weiteren bevorzugten Ausführungsform der Erfindung sind die Perforierungen der Außenschale rechteckig und besitzen in der Breite eine Abmessung von 0,3 cm und in der Höhe von 2,3 cm, jeweils in Bereichsgrenzen von ±20% (oder nur ±10% oder ±5%). Die Höhe betrifft erkennbar die Ausrichtung C-D (oben-unten), die Breite betrifft die Ausrichtung links-rechts. Diese Abmessungen haben sich als besonders geeignet erwiesen zur wetterfesten Befestigung der Außenschale. Die Revision, d.h. das Abnehmen der Außenschalen von den am Gebäude montierten Innenschalen, ist leicht möglich. Gleichzeitig kann der Druck, den die Pflanzen bzw. das Pflanzsubstrat auf die Außenschale ausübt nicht dazu führen, dass die Außenschalen von selbst abfallen.

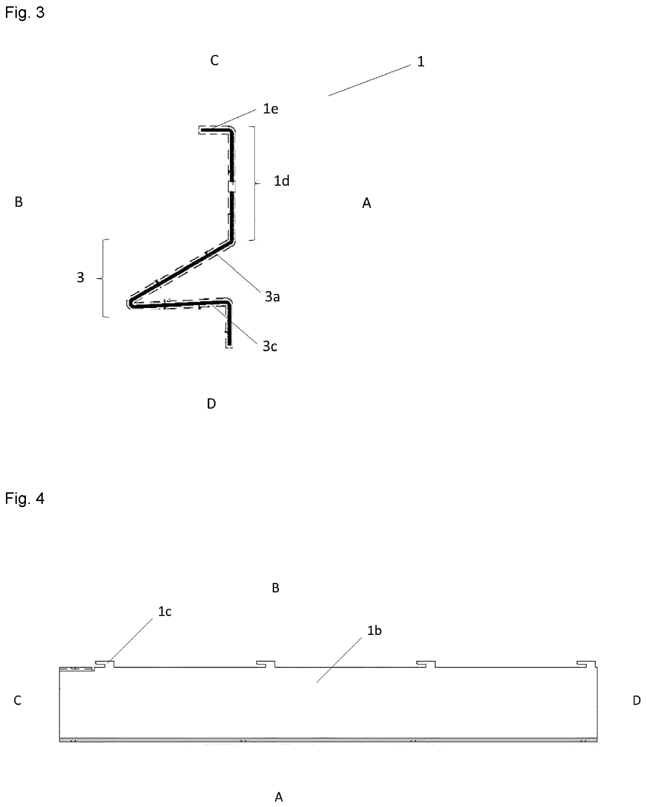

Besonders sinnvoll ist es bei der Erfindung, wenn die Haken insgesamt 6-10 mm von den Abschlusswandungen abstehen (bevorzugt 8-10 mm). Der zum Einhängen vorgesehene Teil der Haken ist dabei 3-6 mm breit. Der Haken formt ein seitlich an den Abschlusswandungen angebrachtes U, wobei der Abstand zwischen beiden U-Schenkeln 3-4 mm sein kann. Das U erstreckt sich in 20 mm entlang der Länge der Abschlusswandung (C-D-Richtung in Fig. 4), ±10% oder nur ±5%.

In einer anderen bevorzugten Ausführungsform steht die Einbuchtung 8,2 cm ±5% von dem flächigen Teil der Innenschale ab, gemessen senkrecht zum flächigen Teil der Innenschale.

Bevorzugt steht der Unterlauf aber nur 8,0 cm ±5% von diesem flächigen Teil der Innenschale, bei Messung entlang des Unterlaufs, ab.

Der Spalt ist in einer bevorzugten Ausführung 0,4 cm groß (±20%, oder auch ±10, bevorzugt nur ±5%). Die Abmessungen von Oberlauf und Unterlauf können aber auch so gewählt werden, dass der Spalt eine Größe von bspw. 0,1-1 cm oder 0,2-0,5 cm oder sogar 0,35-0,45 cm hat.

Fig. 1 zeigt (ausschnittsweise) einen Querschnitt entlang einer Gebäudefassade beim Einsatz der erfindungsgemäßen Pflanzkassette. Gekennzeichnet sind rechts die Wandseite A (Gebäudefassade) und links die Außenseite B, die von der Fassade weg weist. Die linke und rechte Abschlusswandung 1b ist hier nicht gezeigt. Vom umlaufenden Außenschalenrand 2f dieser Ausführung ist aufgrund des Querschnitts nur der obere und untere Teil (an zwei übereinander angeordneten Außenschalen 2) gezeigt.

Fig. 2 zeigt die frontale Ansicht auf die Pflanzkassette (im an die Gebäudefassade montierten Zustand) in einer weiteren bevorzugten Ausführungsform mit zwei Trennwandungen mit Haken 1c und zugeordneten Perforierungen 2c.

Fig. 3 zeigt (ausschnittsweise) die Innenschale 1 der erfindungsgemäßen Pflanzkassette der Ausführung aus Fig. 1 mit ihrer Einbuchtung 3, in einer bevorzugten Ausführungsform mit Innenschalenrand 1e oben - im Querschnitt. Linke und rechte Abschlusswandung (1b, 1b) sind nicht gezeigt.

Fig. 4 zeigt eine der Abschlusswandungen 1b in einer möglichen Ausführung mit vier Haken 1c. Kenntlich gemacht wurden auch oben C und unten D (bei Montage der Pflanzkassette. an einer Gebäudefassade und Draufsicht auf die Fassade im aufrecht stehenden Zustand).

Es ist zweckmäßig, die verschiedenen Ausführungsformen, wenn nicht anders angegeben, miteinander zu kombinieren.

Nachfolgend soll die Erfindung anhand mehrerer bevorzugter Ausführungsbeispiele eingehender erläutert werden. Sie sollen dabei die Erfindung nicht beschränken.

### Ausführungsbeispiele

### Ausführungsbeispiel 1:

Ausführungsbeispiel 1 ist ausschnittsweise in den Fig. 1 und 3 gezeigt. Die gezeigte Innenschale ist einstückig und besteht aus Metall. Es ist ein Spalt al Umkehrpunkt 3b vorhanden.

### Ausführungsbeispiel 2:

Ausführungsbeispiel 2 der Pflanzkassette ist in Fig. 2 im montierten Zustand gezeigt. Vorhanden sind runde Pflanzlöcher und neben zwei Abschlusswandungen 1b (auch in Fig. 4 erkennbar) auch zwei Trennwandungen.

### Bezugszeichen

- 1: Innenschale
- 1b: linke bzw. rechte Abschlusswandung
- 1c: Haken
- 1d: flächiger Teil (der Innenschale)
- 1e: Innenschalenrand (oben)

- 2: Außenschale
- 2b: Pflanzlöcher
- 2c: Perforierungen (der Außenschale)
- 2d: Sicherungsloch (für Sicherungsschrauben)
- 2e: oberste Kante der Innenschale 1
- 2f: umlaufender Außenschalenrand

- 3: Einbuchtung (der Innenschale)
- 3a: Oberlauf (der Einbuchtung)
- 3b: Umkehrpunkt (der Einbuchtung)
- 3c: Unterlauf (der Einbuchtung)

- A: Wandseite
- B: Außenseite
- C: oben (bei Montage an einer Gebäudefassade und Draufsicht auf die Fassade im aufrecht stehenden Zustand)
- D: unten (bei Montage an einer Gebäudefassade und Draufsicht auf die Fassade im aufrecht stehenden Zustand)

## Patentansprüche

1. Pflanzkassette zur Fassadenbegrünung an Gebäuden, umfassend:
a) eine **Innenschale** (1) zur Befestigung parallel an einer Gebäudefassade, mit einem flächigen Teil (1d),
mit einer **linken und einer rechten,** vom flächigen Teil (1d) der Innenschale in Richtung einer Außenseite (B) abstehenden **Abschlusswandung** (1b),
b) wobei die Wandungen jeweils **mindestens zwei,** vom flächigen Teil (1d) in Richtung der Außenseite (B) wegweisende und nach oben verlaufende **Haken** (1c) aufweisen,
c) **Außenschale** (2) mit **Perforierungen** (2c) zum Durchführen der Haken (1c) und Einhängen der Außenschale in diese Haken,
d) wobei die Außenschale runde oder rechteckige **Pflanzlöcher** (2b) von **mindestens 50 mm** Durchmesser bzw. jeweils mindestens 50 mm Länge beider Kanten hat,
e) wobei Innen- und Außenschale (1, 2) aus Metall sind,
f) wobei die Innenschale (1) in der unteren Hälfte eine **nach vorn** in Richtung der Außenseite (B) **weisende, spitz zulaufende Einbuchtung** (3) aufweist, wobei die Einbuchtung einen Oberlauf (3a) und einen Unterlauf (3c) mit einem Umkehrpunkt (3b) dazwischen umfasst.

2. Pflanzkassette nach Anspruch 1, wobei sich die Einbuchtung über die gesamte Breite, zwischen linker und rechter Abschlusswandung (1b, 1b) der Innenschale (1) erstreckt und eine Wulst bildet, die am Umkehrpunkt (3b) eine Umkehrkante bildet, und wobei
sie dort, wo sie spitz zuläuft einen **Spalt** von mindestens 1mm Abstand zur eingehängten Außenschale bildet, durch den Wasser über den Oberlauf (3a) in unter der Pflanzkassette befindliche weitere Pflanzkassetten fließen kann.

3. Pflanzkassette nach einem der Ansprüche 1 oder 2, wobei an der Innenschale (1) mindestens eine senkrecht abstehende **Trennwandung** befestigt ist, wobei auch diese die jeweils mindestens zwei nach vorn abstehende und nach oben verlaufende Haken (1c) aufweist und parallel zur linken und rechten Abschlusswandung (1b, 1b) angeordnet ist.

4. Pflanzkassette nach einem der Ansprüche 1 bis 3, wobei die Außenschale (2) oben (C), unten (D), rechts und links jeweils einen **umlaufenden Außenschalenrand,** welcher in Richtung der Innenschale (1) weist, im Winkel von im Wesentlichen 90° aufweist.

5. Pflanzkassette nach Anspruch 4, wobei bei der Außenschale (2) ihr oberer Rand eine Breite von 2 cm und ihr unterer Rand von 3,5 cm aufweist, alle Werte mit Bereichsgrenzen von ±10%.

6. Pflanzkassette nach einem der Ansprüche 4 oder 5, wobei der Winkel an der oberen Kante der Außenschale bei 85°, an der unteren Kante der Außenschale bei 95°, an der linken und rechten Kante bei jeweils 90° liegt, alle Werte mit Bereichsgrenzen von ±4%.

7. Pflanzkassette nach einem der Ansprüche 1 bis 6, wobei die Innenschale (1) oben (C) einen senkrecht vom flächigen Teil (1d) abstehenden **Innenschalenrand** (1e) aufweist, der in Richtung der Einbuchtung (3) absteht.

8. Pflanzkassette nach einem der Ansprüche 1 bis 7, wobei der Unterlauf (3c) mindestens zwei **Bewässerungslöcher** aufweist, durch die Wasser durchfließen kann.

9. Pflanzkassette nach einem der Ansprüche 1 bis 8, wobei
Oberlauf (3a) und Unterlauf (3c) einen **Winkel** von 27° ±10% aufspannen, und wobei
der flächige Teil (1d) der Innenschale (1) und der Oberlauf (3a) einen **Winkel** von 120° ±20% aufspannen.

10. Pflanzkassette nach einem der Ansprüche 1 bis 9, wobei die Länge des Oberlaufs (3a) 9,5 cm ±20% beträgt.

11. Pflanzkassette nach einem der Ansprüche 1 bis 10, wobei Unterlauf (3c) und der darunter befindliche Teil der Innenschale einen **Winkel** von 87° ±12% aufspannen.

12. Pflanzkassette nach einem der Ansprüche 1 bis 11, wobei im eingehängten Zustand der Abstand zwischen Innenschale und Außenschale gemessen an den Außenseiten bei 8,6 cm ±20% liegt.

13. Pflanzkassette nach einem der Ansprüche 1 bis 12, wobei bei der Innenschale der oben befindliche Innenschalenrand (1e) eine Breite von 2,5 cm ±5% aufweist, und/oder die linke und rechte Abschlusswandung (1b, 1b) eine Breite von 9,0 cm ±20% aufweisen.

14. Pflanzkassette nach einem der Ansprüche 1 bis 13, wobei die Perforierungen (2c) rechteckig sind und in der Breite eine Abmessung von 0,3 cm und in der Höhe von 2,3 cm besitzen, jeweils in Bereichsgrenzen von ±20%.

15. Pflanzkassette nach einem der Ansprüche 1 bis 14, wobei die Einbuchtung (3) 8,2 cm ±5% von dem flächigen Teil (1d) der Innenschale absteht, gemessen senkrecht zum flächigen Teil (1d) der Innenschale (1).
